# EUROPÄISCHE PATENTSCHRIFT

(11) **EP 2 255 886 B1**
(45) Veröffentlichungstag und Bekanntmachung des Hinweises auf die Patenterteilung: **18.04.2012**
(21) Anmeldenummer: 09161482.6
(22) Anmeldetag: 29.05.2009
(51) Int. Cl.: A47J 31/44, B65D 83/16, A47J 43/12, B01F 3/04, B01F 5/06, B01F 15/02

(54) **Vorrichtung zum Aufschäumen und Abgeben von Flüssigkeiten**
Device for foaming and dispensing liquids
Dispositif de moussage et de dépôt de liquides

(43) Veröffentlichungstag der Anmeldung: 01.12.2010
(73) Patentinhaber: Sánchez Cubero, Mercedes, 2545 Selzach (CH)
(72) Erfinder: Sánchez Cubero, Mercedes, 2545 Selzach (CH)
(74) Vertreter: BOVARD AG

(56) Entgegenhaltungen:
- WO-A-2008/055845
- US-A- 4 318 443
- US-A- 5 238 155

## Beschreibung

### Technisches Gebiet der Erfindung

Die vorliegende Erfindung bezieht sich auf eine Vorrichtung zum Aufschäumen und Abgeben von Flüssigkeiten. Die vorliegende Erfindung bezieht sich insbesondere auf eine Vorrichtung zum Aufschäumen und Ausgeben von Flüssigkeiten, umfassend ein Gehäuse, in welchem ein Flüssigkeitsbehälter mit den aufzuschäumenden Flüssigkeiten vorgesehen ist, einen Druckmittelbehälter für die Abgabe eines Druckmittels, und einen Ausgabemechanismus für die Ausgabe der aufgeschäumten Flüssigkeiten.

Eine solche Vorrichtung eignet sich insbesondere für das Aufschäumen und Abgeben von flüssigem Rahm (auch flüssige Sahne genannt), kann aber selbstverständlich auch für andere aufschäumbare flüssige oder beinahe flüssige Medien verwendet werden. Im Allgemeinen wird in dieser Anmeldung unter dem Begriff "Flüssigkeit" ein Stoff oder ein Stoffgemisch verstanden, dessen Form sich relativ einfach unter Anwendung äusserer Kraft verändern lässt, während eine Volumenveränderung (insbesondere Volumenverkleinerung) nur unter Einwirkung von extrem grossen Kräften möglich ist.

### Stand der Technik

Vorrichtungen zum Aufschäumen und Abgeben von Flüssigkeiten mit der oben angegebenen Struktur sind bekannt. Sie werden oft im Haushalt oder in Gastronomiebetrieben verwendet, um beispielsweise flüssigen Rahm (flüssige Sahne) zu Schlagrahm zu verarbeiten oder Saucen, Desserts, etc. aufzuschäumen, damit sie die gewünschte Konsistenz aufweisen.

Die Funktionsweise der meisten solcher Vorrichtungen ist grundsätzlich relativ einfach: Dabei werden zum Beispiel die aufzuschäumenden Flüssigkeiten zunächst in einen Flüssigkeitsbehälter eingefüllt und abgeschlossen. Anschliessend wird ein Druckmittel (zum Beispiel ein komprimiertes Gasgemisch) aus einem entsprechenden Druckmittelbehälter in den Flüssigkeitsbehälter eingeführt, so dass dann die aufzuschäumenden Flüssigkeiten durch die entsprechende Druckzunahme im Innern des Flüssigkeitsbehälters zusammen mit dem Druckmittel aus dem Flüssigkeitsbehälter herausbefördert werden. Anschliessend wird in einer so genannten Mischeinrichtung die Mischung aus den aufzuschäumenden Flüssigkeiten und dem Druckmittel so vermischt, dass den Flüssigkeiten eine schaumige Konsistenz gegeben wird. Am Ausgang der Mischeinrichtung werden dann die aufgeschäumten Flüssigkeiten entnommen und verwendet.

Es existieren aber auch Vorrichtungen, welche eine kompliziertere Struktur haben, beispielsweise indem verschiedene Flüssigkeitsbehälter vorgesehen sind, so dass verschiedene Flüssigkeiten parallel oder gleichzeitig verwendet werden können. Auch können Kühl- bzw. Heizmittel vorgesehen werden, um die auszugebenden Flüssigkeiten vor der Abgabe noch auf eine gewünschte Temperatur zu bringen.

Nachteilig bei diesen bekannten Vorrichtungen zum Aufschäumen und Abgeben von Flüssigkeiten ist jedoch, dass es bei deren Gebrauch in der Regel zum direkten Kontakt zwischen den aufzuschäumenden Flüssigkeiten und dem Druckmittel kommt. Durch diesen Kontakt entstehen im Flüssigkeitsbehälter ideale Verhältnisse für die Entwicklung von Bakterien und sonstigen Mikroorganismen, welche nach einer relativ kurzen Zeit die Flüssigkeiten zum Verderben bringen. Dies ist insbesondere der Fall, wenn als Druckmittel komprimierte Luft verwendet wird. Aus diesem Grund müssen die aufzuschäumenden Flüssigkeiten in herkömmlichen Vorrichtungen nach dem ersten Gebrauch innert einer relativ kurzen Zeit verbraucht werden.

Auch bestehen bereits noch komplexere Vorrichtungen, in welchen die aufzuschäumende Flüssigkeit mittels einer Pumpe aus dem Flüssigkeitsbehälter gesaugt und danach unter Druck gesetzt wird. Diese Vorrichtungen haben jedoch den Nachteil, dass die Flüssigkeit im Flüssigkeitsbehälter durch die Umgebungsluft kontaminiert wird, wodurch sie auch in diesem Fall wie oben beschrieben unbrauchbar wird. Zudem sind solche Vorrichtrungen relativ voluminös und sind zudem auf eine aktive Energieeinspeisung angewiesen. Deshalb sind sie für eine sporadische Verwendung oder einen Einsatz im Freien nicht geeignet.

Die Dokumente US-A-4 318 443 und US-A- 5 238 155 offenbaren Vorrichtungen, welche aufgeschäumte Flüssigkeiten erzeugen und abgeben können. Bei diesen Vorrichtungen wird das Druckmittel über zwei Kanäle geteilt, so dass ein erster Teil die aufzuschäumenden Flüssigkeit aus dem Flüssigkeitsbehälter herausbefördert und in die Aufschäummodul eingeführt wird, während ein zweiter Teil des Druckmittels direkt in das Aufschäummodul eingeführt wird.

WO2008/055845 schlägt ein Verfahren und eine Vorrichtung zum Aufschäumen von flüssigen Lebensmitteln vor, in welchen die schaumartige Form der Flüssigkeit durch eine turbulente Strömung erzeugt wird. Der Schaum wird dabei nicht im Innern der Vorrichtung, sondern beim Austreten aus dieser und dem Kontakt mit der Luft erzeugt.

Nachteilig bei den oben genannten Vorrichtungen zum Aufschäumen und Abgeben von Flüssigkeiten ist jedoch, dass die nötige Menge des Druckmittels nicht regulierbar ist. Deshalb ist auch die Benutzung dieser Vorrichtungen nicht optimal.

### Offenbarung der Erfindung

Es ist daher eine Aufgabe der vorliegenden Erfindung, eine neue Vorrichtung zum Aufschäumen und Ausgeben von Flüssigkeiten vorzuschlagen, welche nicht die Nachteile des Standes der Technik aufweist. Es ist insbesondere eine Aufgabe der vorliegenden Erfindung, eine Vorrichtung zum Aufschäumen und Abgeben von Flüssigkeiten zur Verfügung zu stellen, bei welcher die aufzuschäumenden Flüssigkeiten problemlos über eine längere Zeit verwendet werden können, ohne die Gefahr, dass sie wie oben beschrieben verderben und somit unbrauchbar werden könnten, und dies vor allem auch beim Einsatz von komprimierter Luft als Druckmittel. Gleichzeitig sollte die efindungsgemässe Vorrichtung eine kompakte Baugrösse aufweisen, sowie nicht auf externe Energiequellen angewiesen sein. Schliesslich soll die Konsistenz des Schaums beliebig einstellbar sein.

Gemäss der vorliegenden Erfindung werden diese Ziele insbesondere durch die Elemente der unabhängigen Ansprüche erreicht. Weitere vorteilhafte Ausführungsformen gehen ausserdem aus den abhängigen Ansprüchen und der Beschreibung hervor.

Insbesondere werden diese Ziele der Erfindung dadurch erreicht, dass in einer Vorrichtung zum Aufschäumen und Ausgeben von Flüssigkeiten, umfassend ein Gehäuse, in welchem ein Flüssigkeitsbehälter mit den aufzuschäumenden Flüssigkeiten vorgesehen ist, einen Druckmittelbehälter für die Abgabe eines Druckmittels, und einen Ausgabemechanismus für die Ausgabe der aufgeschäumten Flüssigkeiten, in welcher Vorrichtung ein erster Teil des Druckmittels aus dem Druckmittelbehälter durch eine erste Leitung dem Flüssigkeitsbehälter derart zuführbar ist, dass die aufzuschäumenden Flüssigkeiten aus dem Flüssigkeitsbehälter herausbeförderbar und in eine Mischeinrichtung einführbar sind, ein zweiter Teil des Druckmittels aus dem Druckmittelbehälter durch eine zweite Leitung direkt in die Mischeinrichtung einführbar ist, und die aus dem Flüssigkeitsbehälter herausbeförderten Flüssigkeiten in der Mischeinrichtung mittels des Druckmittels aufschäumbar sind, ein Regelmechanismus vorgesehen ist, mittels welchem das relative Mengenverhältnis zwischen dem ersten Teil des Druckmittels und dem zweiten Teil des Druckmittels einstellbar ist.

Der Vorteil dieser Erfindung liegt insbesondere darin, dass die aufzuschäumenden Flüssigkeiten bei der Verwendung der erfindungsgemässen Vorrichtung erst nach der Herausbeförderung aus dem Flüssigkeitsbehälter in Kontakt mit dem Druckmittel kommen. Somit wird nur die tatsächlich benötigte Menge von Flüssigkeiten überhaupt durch Druckmittel "kontaminiert", was die nicht benötigten Flüssigkeiten unberührt lässt. Auf diese Weise kann eine viel längere Haltbarkeit der Flüssigkeiten ermöglicht werden. Ausserdem wird hierdurch eine qualitative und quantitative Steuerung des Aufschäumens ermöglicht. In der Tat hängt das optimale Mischverhältnis zwischen der aufzuschäumenden Flüssigkeit und dem benötigten Druckmittel einerseits von der Konsistenz der aufzuschäumenden Flüssigkeit und andererseits von den Eigenschaften des Druckmittels selbst ab. Dank dem Regelmechanismus kann garantiert werden, dass das Mischverhältnis für jede Flüssigkeit optimal eingestellt werden kann, so dass auch optimale Aufschäumresultate erreicht werden können.

In einer Ausführungsvariante der vorliegenden Erfindung ist ein Auslösemechanismus vorgesehen, mittels welchem der Auslass des Druckmittels aus dem Druckmittelbehälter aktivierbar ist. Diese Ausführungsvariante hat unter anderem den Vorteil, dass die Herausgabe des Druckmittels nach Bedarf gesteuert werden kann, so dass Druckmittel nur dann aus dem Druckmittelbehälter ausgelassen wird, wenn tatsächlich Flüssigkeiten aufgeschäumt werden müssen. Dadurch kann insbesondere ein unkontrollierter Auslass des Druckmittels verhindert werden.

In einer weiteren Ausführungsvariante der vorliegenden Erfindung ist der Druckmittelbehälter am Gehäuse entfernbar angeordnet und ist über einen Druckabgabemechanismus mit dem Gehäuse verbunden. Diese Ausführungsvariante hat insbesondere den Vorteil, dass verschiedene Druckmittel sehr einfach zum Einsatz kommen können. So kann ein erster Druckmittelbehälter mit einem ersten Druckmittel sehr einfach entfernt und durch einen zweiten Druckmittelbehälter mit einem zweiten Druckmittel ersetzt werden, ohne dass die gesamte Vorrichtung auseinander gebaut werden müsste. Dank dem eingebauten Druckabgabemechanismus kann ausserdem verhindert werden, dass bei diesen Operationen Druckmittel aus dem Druckmittelbehälter ungewollt entweicht. Schliesslich kann ein neuer Druckmittelbehälter sehr einfach einen leeren Druckmittelbehälter ersetzen.

In einer wieder weiteren Ausführungsvariante der vorliegenden Erfindung ist der Flüssigkeitsbehälter durch das Gehäuse gebildet, wobei ein Kolben im Inneren des Gehäuses vorgesehen ist, welcher durch den ersten Teil des Druckmittels in Bewegung derart versetzbar ist, dass die aufzuschäumende Flüssigkeit aus dem Behälter herausförderbar ist. Diese Ausführungsvariante hat insbesondere den Vorteil, dass die aufzuschäumende Flüssigkeit direkt in das Gehäuse eingefüllt werden kann, so dass die gesamte Vorrichtung möglichst einfach und leicht gebaut werden kann. Da das Druckmittel und die Mischeinrichtung als separate Elemente (bzw. Module) aufgebaut sind, und da keine Mischung des Druckmittels mit der Flüssigkeit im Flüssigkeitsbehälter möglich ist, kann die Flüssigkeit auch längere Zeit im Gehäuse gelassen werden, ohne dass sie unbrauchbar würde.

In einer Ausführungsvariante der vorliegenden Erfindung ist der Flüssigkeitsbehälter im Inneren des Gehäuses entfernbar angeordnet und über ein Übergangsventil mit der Mischeinrichtung verbunden. Diese Ausführungsvariante hat insbesondere den Vorteil, dass der Flüssigkeitsbehälter einfach herausgenommen und ersetzt werden kann. Beispielsweise kann der Flüssigkeitsbehälter bei einer längeren Nichtbenutzung herausgenommen und in einem Kühlschrank oder Kühlraum gelagert werden. Auf diese Weise kann die Haltbarkeit der verwendeten Flüssigkeiten noch weiter vergrössert werden. Ausserdem kann so ein Flüssigkeitsbehälter mit einer ersten Flüssigkeit (bzw. einem ersten Flüssigkeitsgemisch) entfernt und durch einen anderen Flüssigkeitsbehälter mit einer zweiten Flüssigkeit ersetzt werden. Auch erlaubt eine Vorrichtung nach dieser Ausführungsvariante der Erfindung einen sehr einfachen Unterhalt, da die meisten Teile der Vorrichtung gar nicht mit den aufzuschäumenden Flüssigkeiten in Kontakt kommen, und da die Vorrichtung ausserdem relativ einfach auseinander gebaut werden kann, um an die verschmutzten Teile heranzukommen.

In einer anderen Ausführungsvariante der vorliegenden Erfindung ist der Flüssigkeitsbehälter als ein flexibler Flüssigkeitsbeutel ausgebildet. Der Vorteil dieser Ausführungsvariante liegt insbesondere darin, dass Beutel relativ wenig Platz benötigen und ausserdem relativ einfach durch das Druckmittel komprimiert werden können. Dies ist zum Beispiel vorteilhaft, wenn die Beutel bei Nichtbenutzung in einem Kühlschrank aufbewahrt werden. Beispielsweise kann dieser Flüssigkeitsbeutel aus einem flexiblen Kunststoff hergestellt werden. Auf diese Weise kann auch verhindert werden, dass die Vorrichtung zusätzliches Gewicht bekommt. Ausserdem ist die Entsorgung der verwendeten Beutel sehr einfach und erfordert keine speziellen Massnahmen. Selbstverständlich sind aber auch andere Materialien denkbar.

In einer wieder anderen Ausführungsvariante der vorliegenden Erfindung ist der flexible Flüssigkeitsbeutel aus einem Kunststoff ausgebildet. Der Vorteil dieser Ausführungsvariante liegt insbesondere darin, dass sich die physischen und mechanischen Eigenschaften von Kunststoff besonders dazu eignen, als Flüssigkeitsbehälter gebraucht zu werden. Auch ist Kunststoff verhältnismässig kostengünstig, was zu einem vorteilhaften Preis der Vorrichtung als Ganzem führt. Nicht zuletzt sind Kunststoffbeutel sehr widerstandsfähig, was die Manipulation von gefüllten Beuteln wesentlich vereinfacht.

In einer nochmals anderen Ausführungsvariante der vorliegenden Erfindung ist der Flüssigkeitsbehälter als ein starrer Behälter ausgebildet, wobei ein Kolben im Innern des Behälters vorgesehen ist, welcher durch den ersten Teil des Druckmittels in Bewegung derart versetzbar ist, dass die aufzuschäumende Flüssigkeit aus dem Behälter herausförderbar ist. Diese Ausführungsvariante hat insbesondere den Vorteil, dass ein starrer Behälter im Vergleich zu einem flexiblen Beutel noch widerstandsfähiger ist. Dank dem integrierten Kolben kann die Abgabe der aufzuschäumenden Flüssigkeiten aber trotzdem sehr einfach realisiert werden, ohne dass die Vorteile des leichten Herausnehmens und Handhabens verloren gingen.

In einer weiteren Ausführungsvariante der vorliegenden Erfindung ist ein Schliessmechanismus vorgesehen, bei wessen Öffnung das Gehäuse auseinander gebaut, und bei Schliessung wieder zusammen gesetzt werden kann. Wie oben genannt, liegt ein Vorteil dieser Ausführungsform insbesondere darin, dass die Vorrichtung beliebig auseinander gebaut und wieder zusammen gesetzt werden kann. In Kombination mit einem entfernbaren Flüssigkeitsbehälter hat dies den wesentlichen Vorteil, dass die nicht gebrauchten Flüssigkeiten bis zum nächsten Gebrauch sehr platzsparend in einem Kühlschrank o.ä. aufbewahrt werden können.

In einer weiteren Ausführungsvariante der vorliegenden Erfindung ist das Druckmittel komprimierte Luft. Diese Ausführungsvariante hat insbesondere den Vorteil, dass viele Flüssigkeiten erst durch die komprimierte Luft auf eine besonders gute Art und Weise aufgeschäumt werden können, so dass die gewünschte Konsistenz des Endprodukts entsteht. Oft sind aber mit herkömmlichen Vorrichtungen andere Druckmittel (Gasgemische) verwendet worden, da die aufzuschäumenden Flüssigkeiten nach der Kontaminierung durch Luft sehr schnell unbrauchbar werden. So kann nun eine optimale Konsistenz des Endprodukts bei einer gleichzeitigen langen Haltbarkeit kombiniert werden.

Schliesslich umfasst in einer weiteren Ausführungsvariante der vorliegenden Erfindung der Ausgabemechanismus einen Hebel und/oder einen Druckknopf und/oder eine Tüllenbetätigung, mittels welchen die Abgabe der aufgeschäumten Flüssigkeiten kontrollierbar ist. Diese Ausführungsvariante hat insbesondere den Vorteil, dass die Abgabe der aufgeschäumten Flüssigkeiten leicht und präzise kontrolliert werden kann. Dadurch eignet sich die Vorrichtung gemäss dieser Ausführungsvariante der Erfindung insbesondere auch dazu, die aufgeschäumten Flüssigkeiten direkt zum Gebrauch abzugeben, ohne dass sie zunächst in andere Servier- bzw. Abgabevorrichtungen eingefüllt werden müssten.

### Kurze Beschreibung der Zeichnungen

Nachfolgend werden die Ausführungsvarianten der vorliegenden Erfindung anhand von Beispielen beschrieben. Die Beispiele der Ausführungen werden durch folgende beigelegte Figuren illustriert:
Fig. 1 zeigt eine schematische Querschnittdarstellung einer Vorrichtung zum Aufschäumen und Abgeben von Flüssigkeiten gemäss einer ersten Ausführungsvariante der vorliegenden Erfindung;
Fig. 2 zeigt schematisch die Vorrichtung aus Fig. 1 in einer Explosionsansicht, d.h. wenn die Vorrichtung auseinander gebaut ist;
Fig. 3 zeigt schematisch die Vorrichtung aus Fig. 1 und 2, bei welcher die erste Phase des Zusammenbaus (Installation des Flüssigkeitsbehälters) dargestellt ist;
Fig. 4 zeigt schematisch die Vorrichtung aus Fig. 1 bis 3, bei welcher die letzte Phase des Zusammenbaus (Installation des Druckmittelbehälters) dargestellt ist;
Fig. 5 zeigt eine schematische Querschnittdarstellung einer Vorrichtung zum Aufschäumen und Abgeben von Flüssigkeiten gemäss einer zweiten Ausführungsvariante der vorliegenden Erfindung.
Fig. 6 zeigt eine schematische Querschnittdarstellung einer Vorrichtung zum Aufschäumen und Abgeben von Flüssigkeiten gemäss einer dritten Ausführungsvariante der vorliegenden Erfindung.

### Ausführungsformen der Erfindung

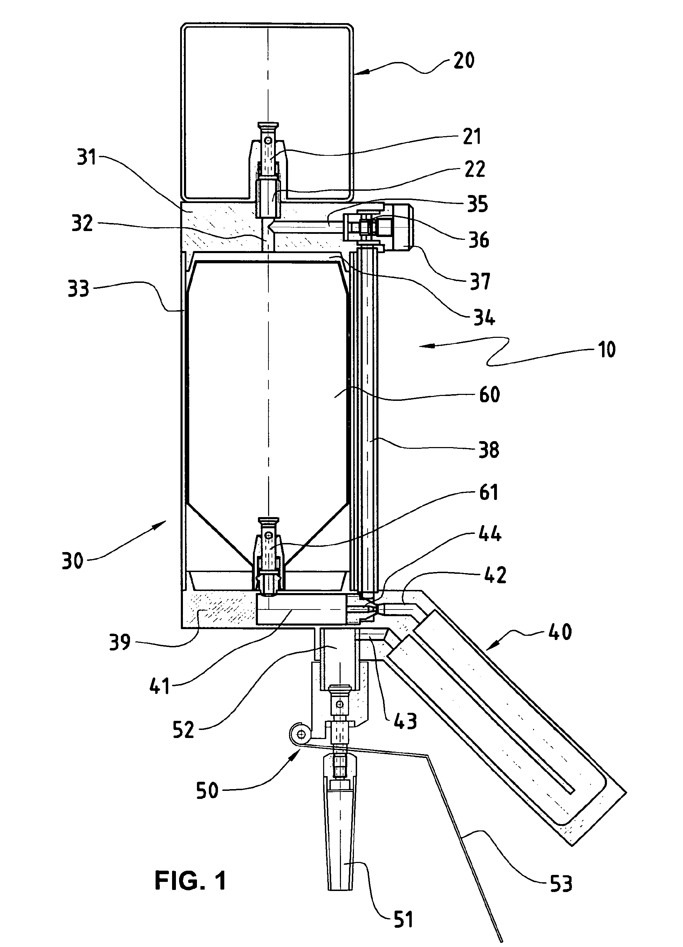

Fig. 1 zeigt eine Vorrichtung 10 zum Aufschäumen und Abgeben von Flüssigkeiten gemäss einer ersten Ausführungsvariante der vorliegenden Erfindung. In Fig. 1 bezieht sich das Bezugszeichen 20 auf den Druckmittelbehälter, das Bezugszeichen 30 auf ein Gehäuse, in welchem sich ein Flüssigkeitsbehälter 60 mit aufzuschäumenden Flüssigkeiten befindet, und das Bezugszeichen 50 auf einen Ausgabemechanismus für die Ausgabe der aufgeschäumten Flüssigkeiten.

Der Druckmittelbehälter 20 kann beispielsweise ein handelsüblicher Druckmittelbehälter sein. Es ist aber auch durchaus denkbar, für diese Vorrichtung 10 spezielle Druckmittelbehälter 20 zur Verfügung zu stellen. Der Druckmittelbehälter 20 ist über einen Druckabgabemechanismus 21, 22 mit dem Gehäuse 30 verbunden. Der Druckabgabemechanismus 21, 22 kann beispielsweise aus einem gewöhnlichen Rückschlagventil 21 und dem dazugehörenden Zentrierrohr 22 bestehen. Selbstverständlich sind für den Druckabgabemechanismus aber auch andere ähnliche Realisierungsvarianten denkbar.

Der Druckmittelbehälter 20 ist am Gehäuse 30 entfernbar angeordnet und kann sehr einfach ersetzt werden. So können für die Vorrichtung 10 insbesondere verschiedene Druckmittel vorgesehen werden, welche nach Bedarf installiert werden können. Auch bei einem leeren Druckmittelbehälter 20 kann dieser sehr einfach durch einen vollen ersetzt werden. Zur Befestigung des Druckmittelbehälters 20 am Gehäuse 30 können Befestigungsmittel vorgesehen werden (nicht dargestellt), so dass die benötigte Stabilität gewährleistet werden kann.

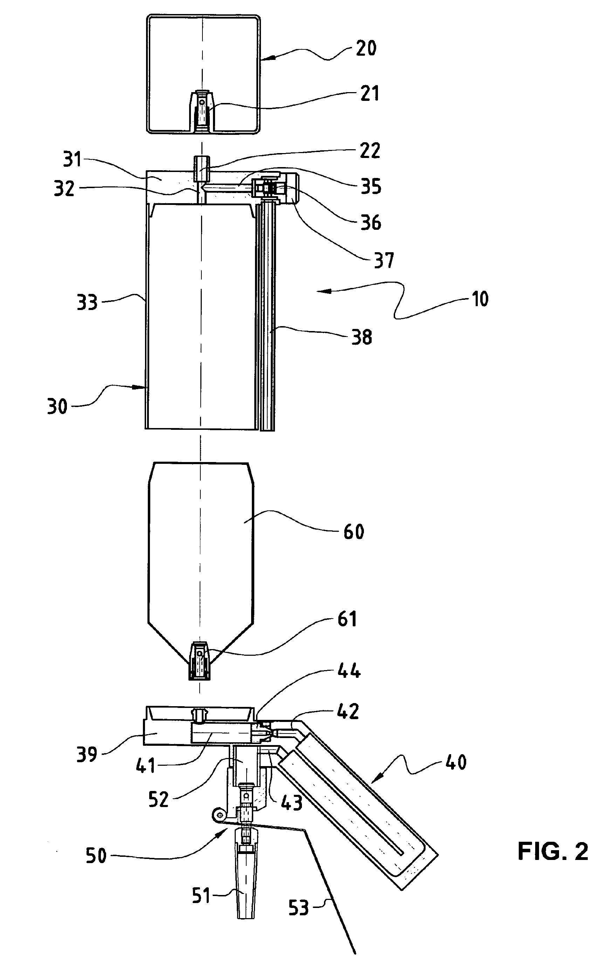

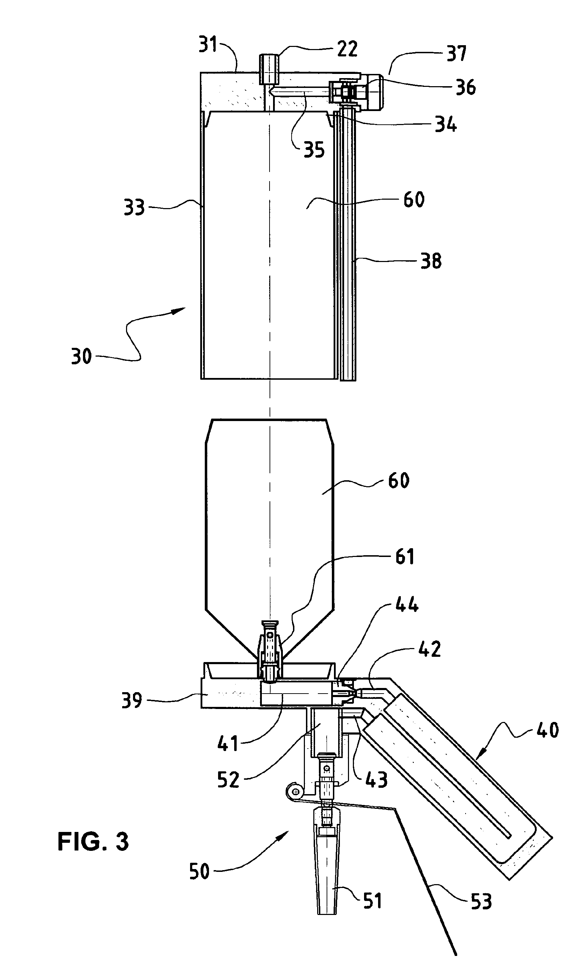

Das Gehäuse 30 besteht seinerseits aus verschiedenen Elementen 31, 33, 39, welche dank einem Schliessmechanismus (nicht dargestellt) miteinander verbunden und befestigt werden können, so dass eine kompakte Vorrichtung 10 entsteht. Insbesondere besteht das Gehäuse 30 aus einem Deckelteil 31, in welchem das Zentrierrohr 22 integriert ist und an welchem der Druckmittelbehälter 20 befestigt wird, aus einer Wandung 33, welche den mittleren Teil des Gehäuses 30 bildet, sowie aus einem Bodenteil 39, welcher mit der Mischeinrichtung 40 und der Ausgabemechanismus 50 verbunden ist. Diese einzelnen Gehäuseelemente 31, 33, 39 können in Fig. 2 und 3 noch besser wahrgenommen werden, da hier die Vorrichtung 10 jeweils in einer Explosionsansicht dargestellt ist.

Im Deckelteil 32 des Gehäuses 30 befinden sich eine erste Leitung 32 und eine zweite Leitung 35, welche zur Führung des Druckmittels aus dem Druckmittelbehälter 20 vorgesehen sind. So verbindet die erste Leitung 32 den Druckmittelbehälter 20 mit dem Inneren 34 des Gehäuses 30, in welchem sich der Flüssigkeitsbehälter 60 befindet. Die zweite Leitung 35 hingegen verbindet den Druckmittelbehälter 20 mit der Mischeinrichtung 40.

Ebenfalls im Deckelteil 32 des Gehäuses 30 befinden sich ein Auslösemechanismus (nicht dargestellt) und ein Regelmechanismus 36, 37. Dieser Auslösemechanismus und dieser Regelmechanismus können als eine Einheit ausgebildet sein. Allerdings ist es jedem Fachmann klar, dass es sich auch um zwei vollkommen separate Einrichtungen handeln können und die Erfindung soll deshalb nicht nur auf die Lösung eingeschränkt werden, in welcher diese beiden Funktionalitäten in einer einzigen Einrichtung vereint sind. So kann mittels dieses Auslösemechanismus der Auslass des Druckmittels aus dem Druckmittelbehälter 20 aktiviert bzw. deaktiviert werden.

Gleichzeitig dient der Regelmechanismus 36, 37 dazu, das relative Mengenverhältnis zwischen dem ersten Teil des Druckmittels (welcher über die erste Leitung 32 dem Gehäuseinnern 34 zugeführt wird) und dem zweiten Teil des Druckmittels (welcher über die zweite Leitung 35 der Mischeinrichtung direkt zugeführt wird) einstellbar ist. So kann indirekt auch das relative Mengenverhältnis zwischen dem Druckmittel und der aufzuschäumenden Flüssigkeit in der Mischeinheit geregelt werden. Wie oben beschrieben ist das relative Mengenverhältnis zwischen dem Druckmittel und der aufzuschäumenden Flüssigkeit in der Mischeinheit entscheidend, um eine optimale Konsistenz des Endprodukts zu erreichen.

In Figur 1 besteht der Regelmechanismus 36, 37 insbesondere aus einem regelbaren Ventil 36, welcher mittels eines Drehknopfs 37 geregelt werden kann. Dieses regelbare Ventil 36 kann dann nach der Einstellung des gewünschten Mischverhältnisses beispielsweise durch den Druck auf den Drehknopf 37 geöffnet werden, wodurch das Druckmittel aus dem Druckmittelbehälter 20 in die erste Leitung 32 und in die zweite Leitung 35 einfliessen kann.

Die zweite Leitung 35 setzt sich durch einen zweiten Abschnitt 38 fort, welcher den zweiten Teil des Druckmittels direkt in die Mischeinrichtung 40, d.h. in die Eingangsleitung 42 der Mischeinrichtung 40 führt. In der Mischeinrichtung 40 wird anschliessend dieser zweite Teil des Druckmittels mit der aufzuschäumenden Flüssigkeit vermischt, welcher aus dem Flüssigkeitsbehälter 60 mittels des ersten Teils des Druckmittels herausbefördert und dann über ein Übergangsventil 61, eine Staukammer 41 und ein Mischventil 44 ebenfalls in die Eingangsleitung 42 der Mischeinrichtung 40 eingeführt worden ist. Wie bereits erwähnt, wird das relative Mengenverhältnis zwischen dem ersten und dem zweiten Teil des Druckmittels durch den Regelmechanismus 36, 37 in Abhängigkeit von der aufzuschäumenden Flüssigkeit so eingestellt, dass eine optimale Aufschäumung gewährleistet werden kann.

Nach der Aufschäumung verlassen die aufgeschäumten Flüssigkeiten die Mischeinrichtung 40 über eine Ausgangsleitung 43 und kommen in den Ausgabemechanismus 50. Dieser Ausgabemechanismus 50 besitzt beispielsweise einen Hebel 53, durch dessen Betätigung die Ausgabe der aufgeschäumten Flüssigkeiten über den Ausgabekanal 51 veranlasst werden kann. Für jeden Fachmann ist es natürlich ersichtlich, dass der Ausgabemechanismus 50 auch auf viele verschiedene Weisen realisiert werden kann (beispielsweise mit einem Druckknopf oder einer Tüllenbetätigung), und dass die dargestellte Version nur eine von diesen verschiedenen Möglichkeiten ist.

Der erste Teil des Druckmittels wird nach Austritt aus dem Druckmittelbehälter 20 durch die erste Leitung 32 dem Inneren 34 des Gehäuses 30 zugeführt. Im Inneren 34 befindet sich der Flüssigkeitsbehälter 60, welcher in Fig. 1 als ein flexibler Kunststoffbeutel ausgebildet ist. Wie soeben beschrieben ist dieser Flüssigkeitsbehälter 60 über das Übergangsventil 61, die Staukammer 41 und ein Mischventil 44 mit der Mischeinrichtung 40 verbunden, so dass die sich im Flüssigkeitsbehälter 60 befindende Flüssigkeit der Mischeinrichtung 40 zugeführt werden kann.

Durch das Einströmen des Druckmittels ins Innere 34 des Gehäuses 30 steigt darin erheblich der Druck, so dass durch diese Druckerhöhung Kräfte auf den Flüssigkeitsbehälter 60 wirken. Auf Grund dieser Kräfte verkleinert sich das Volumen des Flüssigkeitsbehälters 60, so dass die sich darin befindenden Flüssigkeiten wie oben beschrieben aus dem Flüssigkeitsbehälter 60 heraus- und in die Mischeinrichtung 40 hineinbefördert werden. Es findet jedoch keine Kontaminierung der verbleibenden Flüssigkeitsmenge im Flüssigkeitsbehälter 60 durch das Druckmittel statt. Anschliessend werden die herausbeförderten Flüssigkeiten aufgeschäumt und zur Abgabe über den Abgabemechanismus 50 bereit gestellt.

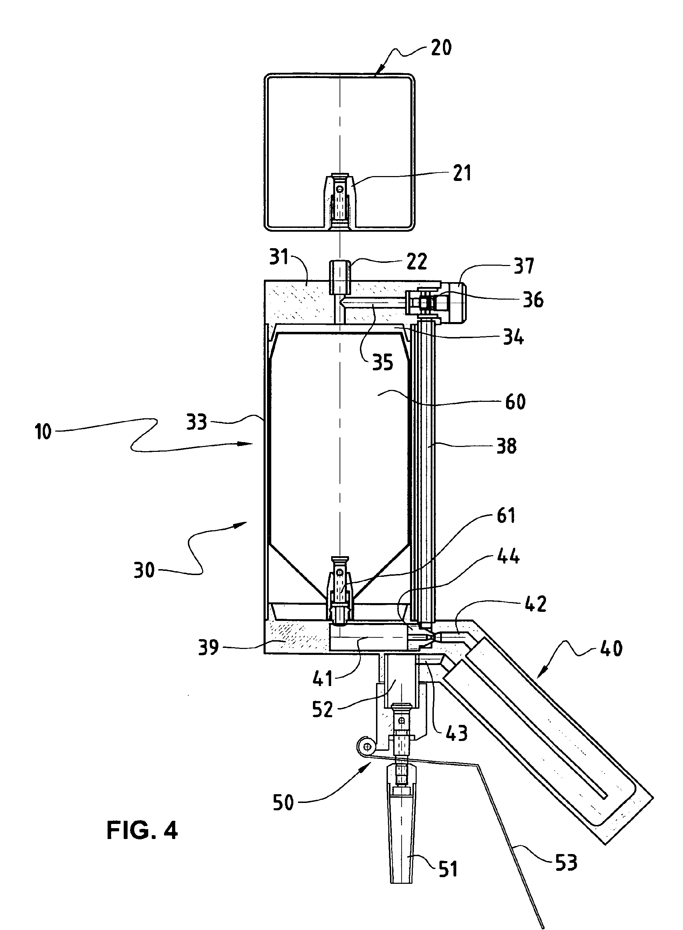

Wie in Fig. 2, 3 und 4 dargestellt, kann die Vorrichtung 10 leicht auseinander gebaut und dann anschliessend wieder zusammen geschlossen werden. Daher kann der Flüssigkeitsbehälter 60 leicht herausgenommen und beispielsweise in einen Kühlschrank gestellt werden. Da die sich darin befindenden Flüssigkeiten nicht durch das Druckmittel kontaminiert sind, kann dieser Flüssigkeitsbehälter 60 problemlos über längere Zeit aufbewahrt werden. Zudem ist es auch möglich, einen Flüssigkeitsbehälter 60 durch einen anderen Flüssigkeitsbehälter 60 schnell zu ersetzen, falls mehrere Flüssigkeiten aufgeschäumt werden sollen.

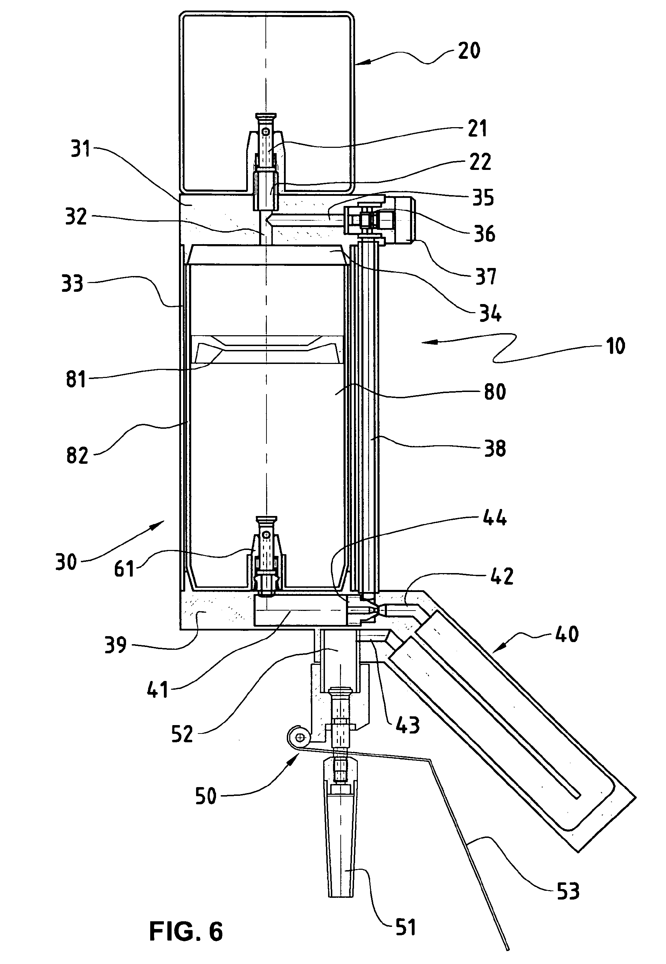

Eine andere Ausführungsvariante der Erfindung, welche lediglich einen starren Flüssigkeitsbehälter 80 verwendet aber ansonsten auf genau dem gleichen Prinzip beruht, ist in Fig. 6 dargestellt. In dieser Figur umfasst der starre Flüssigkeitsbehälter 80 einen beweglichen Kolben 81, welcher durch die Einwirkung des Druckmittels zwischen der Behälterwandung 82 bewegt werden kann. Wie schon oben beschrieben steigt durch das Einströmen des Druckmittels im Inneren 34 des Gehäuses 30 der Druck, so dass durch diese Druckerhöhung Kräfte auf den Kolben 81 wirken. Auf Grund dieser Kräfte verkleinert sich das Volumen des Flüssigkeitsbehälters 80, so dass die sich darin befindenden Flüssigkeiten wie oben beschrieben aus dem Flüssigkeitsbehälter 80 heraus- und in die Mischeinrichtung 40 hineinbefördert werden. Aber auch hier findet keine Kontaminierung der verbleibenden Flüssigkeitsmenge im Flüssigkeitsbehälter 80 durch das Druckmittel statt. Auch der starre Flüssigkeitsbehälter 80 kann einfach aus der Vorrichtung 10 herausgenommen und ersetzt werden.

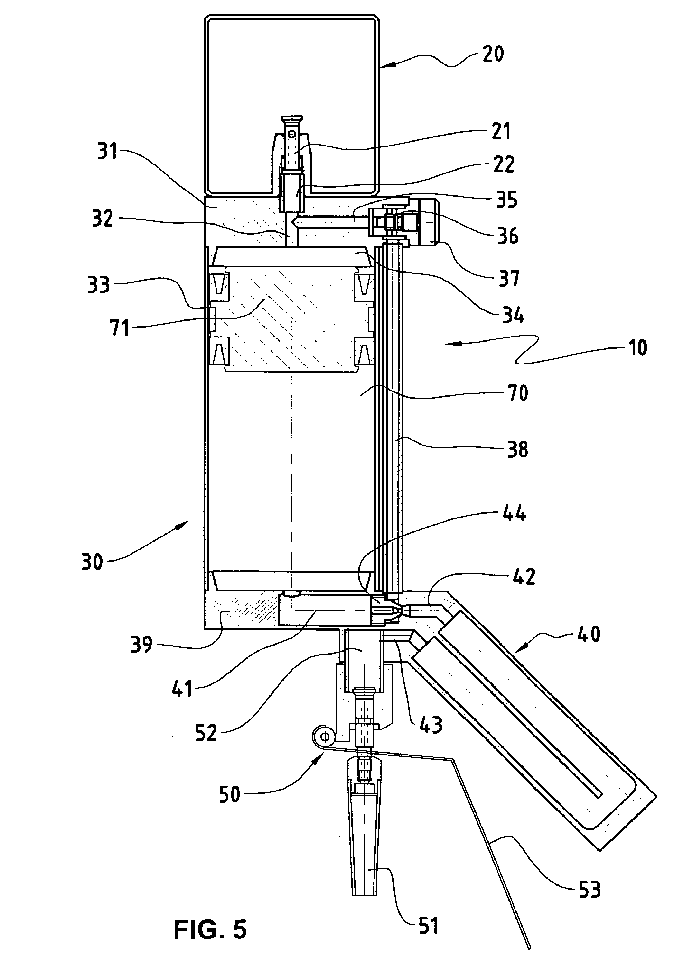

Fig. 5 zeigt schliesslich eine Vorrichtung 10 zum Aufschäumen und Abgeben von Flüssigkeiten gemäss einer zweiten Ausführungsvariante der vorliegenden Erfindung. In Fig. 5 tragen die Elemente, welche schon in vorangehenden Figuren vorkommen, dieselben Bezugszeichen, so dass sie an dieser Stelle nicht näher beschrieben werden.

Im Gegensatz zur ersten Ausführungsvariante der Erfindung befindet sich im Inneren 34 des Gehäuses 30 kein separater Flüssigkeitsbehälter mehr. Stattdessen werden die aufzuschäumenden Flüssigkeiten direkt ins Innere 70 des Gehäuses 30 eingefüllt, wobei auch in diesem Fall ein Kolben 71 vorgesehen wird, so dass zwischen der Gehäusewand 33, dem Bodenteil 39 und dem Kolben 71 ein abgeschlossener Raum 70 mit aufzuschäumenden Flüssigkeiten entsteht. Wenn dann das Druckmittel ins Innere 34 des Gehäuses 30 einfliesst, werden wieder durch die Druckerhöhung Kräfte auf den Kolben 71 ausgeübt, wobei sich das Volumen des Flüssigkeitsbehälters 70 verkleinert. Die sich darin befindenden Flüssigkeiten werden auch in diesem Fall wie oben beschrieben aus dem Flüssigkeitsbehälter 70 heraus- und in die Mischeinrichtung 40 hineinbefördert. Durch die Abdichtung des Kolbens 71 gegenüber der Gehäusewand 33 findet aber auch hier keine Kontaminierung der verbleibenden Flüssigkeitsmenge im Flüssigkeitsbehälter 70 durch das Druckmittel statt.

Zum Schluss sei darauf hingewiesen, dass die hier beispielhaft beschriebenen Ausführungsvarianten nur eine Auswahl an möglichen Realisierungen der erfindungsgemässen Gedanken darstellen und keinesfalls als limitierend angeschaut werden sollen. Der Fachmann wird verstehen, dass noch andere Implementierungen der Erfindung und weitere Elemente möglich sind, ohne dass die wesentlichen Merkmale der Erfindung vernachlässigt werden. Insbesondere können andere, nichterwähnte Befestigungs-, Dichtungs- oder Regelungsmittel vorgesehen werden, durch welche die Funktionsweise der erfindungsgemässen Vorrichtung noch weiter verbessert werden kann.

## Patentansprüche

1. Vorrichtung (10) zum Aufschäumen und Ausgeben von Flüssigkeiten, umfassend ein Gehäuse (30), in welchem ein Flüssigkeitsbehälter (60, 70, 80) mit den aufzuschäumenden Flüssigkeiten vorgesehen ist, einen Druckmittelbehälter (20) für die Abgabe eines Druckmittels, und einen Ausgabemechanismus (50) für die Ausgabe der aufgeschäumten Flüssigkeiten, in welcher Vorrichtung (10)
- ein erster Teil des Druckmittels aus dem Druckmittelbehälter (20) durch eine erste Leitung (32) dem Flüssigkeitsbehälter (60, 70, 80) derart zuführbar ist, dass die aufzuschäumenden Flüssigkeiten aus dem Flüssigkeitsbehälter (60, 70, 80) herausbeförderbar und in eine Mischeinrichtung (40) einführbar sind,
- ein zweiter Teil des Druckmittels aus dem Druckmittelbehälter (20) durch eine zweite Leitung (35, 38) direkt in die Mischeinrichtung (40) einführbar ist, und
- die aus dem Flüssigkeitsbehälter (60, 70, 80) herausbeförderten Flüssigkeiten in der Mischeinrichtung (40) mittels des Druckmittels aufschäumbar sind,
**dadurch gekennzeichnet,**
**dass** ein Regelmechanismus (36, 37) vorgesehen ist, mittels welchem das relative Mengenverhältnis zwischen dem ersten Teil des Druckmittels und dem zweiten Teil des Druckmittels einstellbar ist.

2. Vorrichtung nach Anspruch 1, **dadurch gekennzeichnet, dass** ein Auslösemechanismus vorgesehen ist, mittels welchem der Auslass des Druckmittels aus dem Druckmittelbehälter (20) aktivierbar ist.

3. Vorrichtung nach einem der Ansprüche 1 oder 2, **dadurch gekennzeichnet, dass** der Druckmittelbehälter (20) am Gehäuse (30) entfernbar angeordnet und über einen Druckabgabemechanismus (21, 22) mit dem Gehäuse (30) verbunden ist.

4. Vorrichtung nach einem der Ansprüche 1 bis 3, **dadurch gekennzeichnet, dass** der Flüssigkeitsbehälter (70) durch das Gehäuse (30) gebildet ist, wobei ein Kolben (71) im Inneren des Gehäuses (30) vorgesehen ist, welcher durch den ersten Teil des Druckmittels in Bewegung derart versetzbar ist, dass die aufzuschäumende Flüssigkeit aus dem Behälter (70) herausförderbar ist.

5. Vorrichtung nach einem der Ansprüche 1 bis 3, **dadurch gekennzeichnet, dass** der Flüssigkeitsbehälter (60, 80) im Inneren des Gehäuses (30) entfernbar angeordnet und über ein Übergangsventil (61) mit der Mischeinrichtung (40) verbunden ist.

6. Vorrichtung nach Anspruch 5, **dadurch gekennzeichnet, dass** der Flüssigkeitsbehälter als ein flexibler Flüssigkeitsbeutel (60) ausgebildet ist.

7. Vorrichtung nach Anspruch 6, **dadurch gekennzeichnet, dass** der flexible Flüssigkeitsbeutel (60) aus einem Kunststoff ausgebildet ist.

8. Vorrichtung nach Anspruch 5, **dadurch gekennzeichnet, dass** der Flüssigkeitsbehälter als ein starrer Behälter (80) ausgebildet ist, wobei ein Kolben (81) im Innern des Behälters (80) vorgesehen ist, welcher durch den ersten Teil des Druckmittels in Bewegung derart versetzbar ist, dass die aufzuschäumende Flüssigkeit aus dem Behälter (80) herausförderbar ist.

9. Vorrichtung nach einem der Ansprüche 1 bis 8, **dadurch gekennzeichnet, dass** ein Schliessmechanismus vorgesehen ist, bei wessen Öffnung das Gehäuse (30) auseinander gebaut, und bei Schliessung wieder zusammen gesetzt werden kann.

10. Vorrichtung nach einem der Ansprüche 1 bis 9, **dadurch gekennzeichnet, dass** das Druckmittel komprimierte Luft ist.

11. Vorrichtung nach einem der Ansprüche 1 bis 10, **dadurch gekennzeichnet, dass** der Ausgabemechanismus (50) einen Hebel (53) und/oder einen Druckknopf und/oder eine Tüllenbetätigung umfasst, mittels welchen die Abgabe der aufgeschäumten Flüssigkeit kontrollierbar ist.

## Claims

1. Device (10) for foaming and dispensing of liquids, comprising a housing (30), in which a fluid reservoir (60, 70, 80) having the liquids to be foamed is provided, a pressurised medium reservoir (20) for delivering a pressurised medium, and a dispensing mechanism (50) for dispensing the foamed liquids, in which device (10)
- a first portion of the pressurised medium is able to be conducted out of the pressurised medium reservoir (20) through a first pipe (32) to the fluid reservoir (60, 70, 80) in such a way that the liquids to be foamed are able to be conveyed out of the fluid reservoir (60, 70, 80) and introduced into a mixing device (40),
- a second portion of the pressurised medium is able to be introduced directly out of the pressurised medium reservoir (20) into the mixing device (40) through a second pipe (35, 38), and
- the liquids conveyed out of the fluid reservoir (60, 70, 80) into the mixing device (40) are able to be foamed by means of the pressurised medium,
**characterised in that**
an adjustment mechanism (36, 37) is provided by means of which the relative proportion between the first portion of the pressurised medium and the second portion of the pressurised medium can be adjusted.

2. Device according to claim 1, **characterised in that** a release mechanism is provided, by means of which the release of the pressurised medium out of the pressurised medium reservoir (20) is able to be actuated.

3. Device according to one of claims 1 or 2, **characterised in that** the pressurised medium reservoir (20) is arranged removably on the housing (30) and is connected to the housing (30) via a pressure delivery mechanism (21, 22).

4. Device according to one of claims 1 to 3, **characterised in that** the fluid reservoir (70) is formed by the housing (30), a piston (71) being provided in the interior of the housing (30), which piston is able to be actuated by the first portion of the pressurised medium in such a way that the liquid to be foamed is able to be conveyed out of the reservoir (70).

5. Device according to one of claims 1 to 3, **characterised in that** the fluid reservoir (60, 80) is arranged removably in the interior of the housing (30) and is connected via a transition valve (61) to the mixing device (40).

6. Device according to claim 5, **characterised in that** the fluid reservoir is designed as a flexible fluid bag (60).

7. Device according to claim 6, **characterised in that** the flexible fluid bag (60) is made of a synthetic material.

8. Device according to claim 5, **characterised in that** the fluid reservoir is designed as a rigid container (80), a piston (81) being provided in the interior of the container (80), which piston is able to be actuated by the first portion of the pressurised medium in such a way that the liquid to be foamed is able to be conveyed out of the container (80).

9. Device according to one of claims 1 to 8, **characterised in that** a locking mechanism is provided, upon the opening of which the housing (30) is able to be disassembled and upon closing is able to be reassembled.

10. Device according to one of claims 1 to 9, **characterised in that** the pressurised medium is compressed air.

11. Device according to one of claims 1 to 10, **characterised in that** the dispensing mechanism (50) comprises a lever (53) and/or a push button and/or a nozzle actuation, by means of which the dispensing of the foamed liquid is controllable.

## Revendications

1. Dispositif (10) de moussage et de distribution de liquides, comprenant un boîtier (30), dans lequel est prévu un récipient à liquide (60, 70, 80) avec les liquides à mousser, un réservoir de moyen sous pression (20) pour la distribution d'un moyen sous pression, et un mécanisme de distribution (50) pour la distribution des liquides moussés, dans quel dispositif (10)
- une première partie du moyen sous pression peut être conduite par une première ligne conductrice (32) du réservoir de moyen sous pression (20) en le récipient à liquide (60, 70, 80) de sorte que les liquides à mousser peuvent être expulsés du récipient à liquide (60, 70, 80) et introduits dans un dispositif de mélange (40),
- une deuxième partie du moyen sous pression peut être introduite par une deuxième ligne conductrice (35, 38) du réservoir de moyen sous pression (20) directement dans le dispositif de mélange (40), et
- les liquides expulsés du récipient à liquide (60, 70, 80) peuvent être moussés dans le dispositif de mélange (40) par le biais du moyen sous pression,
**caractérisé en ce qu'**un mécanisme de réglage (36, 37) est prévu, par le biais duquel le rapport volumique relatif entre la première partie du moyen sous pression et la deuxième partie du moyen sous pression peut être ajusté.

2. Dispositif selon la revendication 1, **caractérisé en ce qu'**un mécanisme de déclenchement est prévu, par le biais duquel la sortie du moyen sous pression du réservoir de moyen sous pression (20) peut être activée.

3. Dispositif selon la revendication 1 ou 2, **caractérisé en ce que** le réservoir de moyen sous pression (20) est agencé sur le boîtier (30) pour pouvoir être enlevé et **en ce qu'**il est connecté au boîtier (3) par le biais d'un mécanisme de restitution de pression (21, 22).

4. Dispositif selon l'une des revendications 1 à 3, **caractérisé en ce que** le récipient à liquide (70) est constitué par le boîtier (30), un piston (71) étant prévu à l'intérieur du boîtier (30), qui, par la première partie du moyen de pression, peut être mis en déplacement de sorte que le liquide à mousser peut être expulsé du récipient (70).

5. Dispositif selon l'une des revendications 1 à 3, **caractérisé en ce que** le récipient à liquide (60, 80) est agencé à l'intérieur du boîtier (30) pour pouvoir être enlevé et **en ce qu'**il est connecté au dispositif de mélange (40) par le biais d'une valve intermédiaire (61).

6. Dispositif selon la revendication 5, **caractérisé en ce que** le récipient à liquide est conçu comme un sac à liquide flexible (60).

7. Dispositif selon la revendication 6, **caractérisé en ce que** le sac à liquide flexible (60) est fabriqué en un matériau synthétique.

8. Dispositif selon la revendication 5, **caractérisé en ce que** le récipient à liquide est conçu comme un récipient rigide (80), un piston (81) étant prévu à l'intérieur du récipient (80) qui, par la première partie du moyen sous pression, peut être mis en déplacement de sorte que le liquide à mousser peut être expulsé du récipient (80).

9. Dispositif selon l'une des revendications 1 à 8, **caractérisé en ce qu'**un mécanisme de fermeture est prévu, lors de l'ouverture duquel le boîtier (30) peut être démonté, et lors de la fermeture duquel il peut de nouveau être monté.

10. Dispositif selon l'une des revendications 1 à 9, **caractérisé en ce que** le moyen sous pression est de l'air comprimé.

11. Dispositif selon l'une des revendications 1 à 10, **caractérisé en ce que** le mécanisme de distribution (50) comprend un levier (53) et/ou un bouton-pression et/ou un actionnement par douille, par le biais desquels la distribution du liquide moussé peut être contrôlée.
